(19) Europäisches Patentamt
European Patent Office
Office européen des brevets

(11) EP 1 357 136 A1

(12) EUROPEAN PATENT APPLICATION

(43) Date of publication:
29.10.2003 Bulletin 2003/44

(51) Int Cl.[7]: C08F 10/02

(21) Application number: 02076664.8

(22) Date of filing: 26.04.2002

(84) Designated Contracting States:
AT BE CH CY DE DK ES FI FR GB GR IE IT LI LU MC NL PT SE TR
Designated Extension States:
AL LT LV MK RO SI

(71) Applicant: ATOFINA Research
7181 Seneffe (Feluy) (BE)

(72) Inventors:
- Maziers, Eric
7180 Seneffe (BE)
- Leplatois, Ludovic
1190 Bruxelles (BE)

# (54) Injection molded article out of high density polyethylene prepared with a metallocene catalyst

(57) This invention discloses single layer articles having improved dimensional stability produced by injection moulding and consisting essentially of high density polyethylene (HDPE) resins prepared with a bis-indenyl metallocene catalyst system.

FIGURE 1

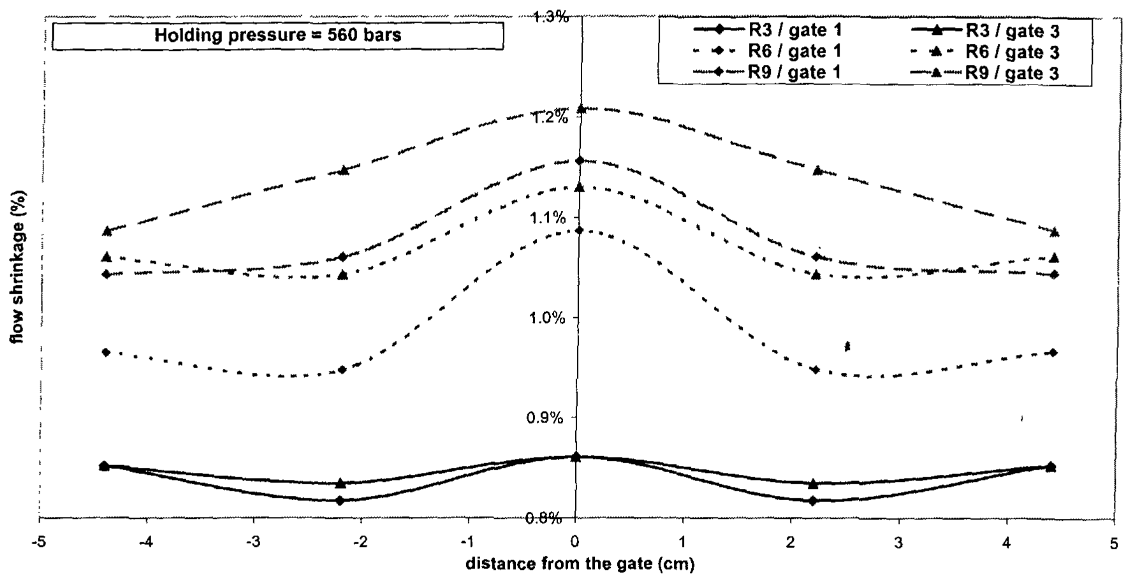


EP 1 357 136 A1

FIGURE 2

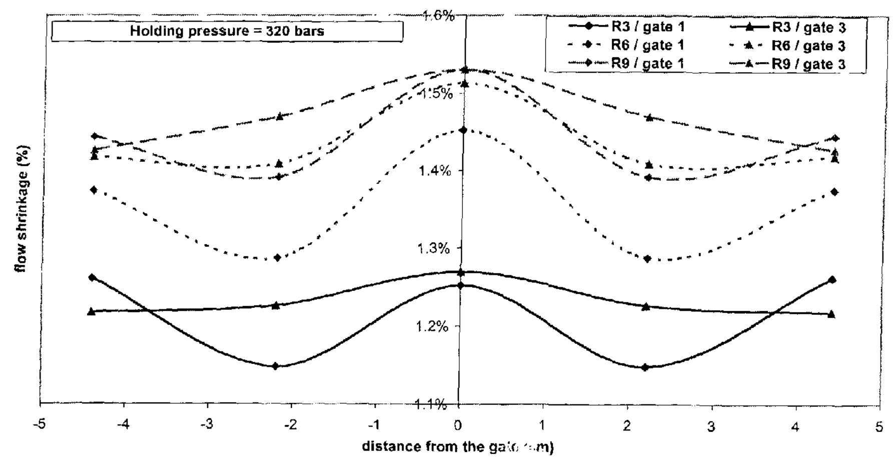


FIGURE 3

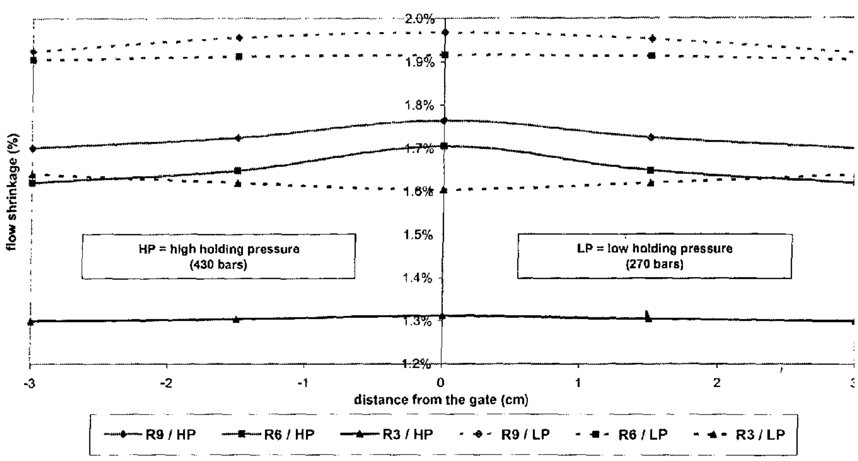


FIGURE 4

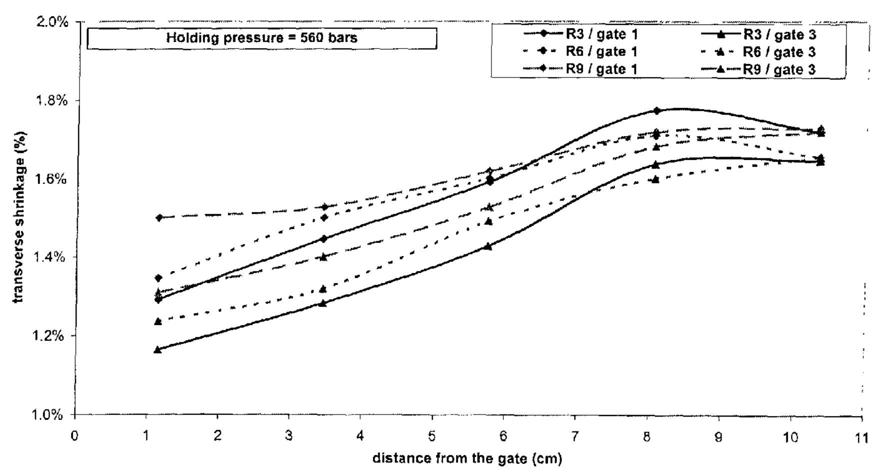

## Description

The present invention relates to articles having improved dimensional stability and prepared by injection moulding from metallocene-produced high density polyethylene.

High density polyethylene as sold for example by Solvay under the commercial name Eltex® 4020 and used for injection moulding is usually prepared with a Ziegler-Natta catalyst. The articles produced from these resins exhibit a very poor dimensional stability. None of the solutions adopted so far to overcome that drawback have been very satisfactory:

- lower molecular weight polyethylene resins provide a better dimensional stability but at the expense of the mechanical properties.
- polypropylene resins also provide a better dimensional stability but the impact resistance at low temperature is not acceptable.

There is thus a need for resins that will overcome these deficiencies.

It is an aim of the present invention to provide polyethylene resins for injection moulding having reduced shrinkage.

It is another aim of the present invention to provide polyethylene resins for injection moulding having reduced warpage.

It is a further aim of the present invention to provide a polyethylene resin for injection moulding having high impact resistance.

It is yet another aim of the present invention to provide polyethylene resins for injection moulding that are easy to process and have good mechanical properties.

Accordingly, the present invention provides articles, preferably single layer articles, produced by injection moulding and consisting essentially of high density polyethylene (HDPE) resins prepared with a bis-indenyl metallocene catalyst system.

The high density polyethylene used in the present invention has a density ranging from 0.945 to 0.960 $g/cm^3$, preferably from 0.947 to 0.955 $g/cm^3$ a melt flow index of from 0.5 to 400 g/10 min, preferably from 0.5 to 200 g/10 min and more preferably from 0.5 to 50 g/10 min.

In this specification, the density of the polyethylene is measured at 23 °C using the procedures of standard test ASTM D 1505.

The melt index MI2 is measured using the procedures of standard test ASTM D 1238 at 190 °C and under a load of 2.16 kg.

The metallocene used to prepare the high density polyethylene is a bis-indenyl represented by the general formula:

I. $R''(Ind)_2MQ_2$

wherein (Ind) is an indenyl or an hydrogenated indenyl, substituted or unsubstituted, R" is a structural bridge between the two indenyls to impart stereorigidity that comprises a $C_1$-$C_4$ alkylene radical, a dialkyl germanium or silicon or siloxane, or an alkyl phosphine or amine radical, which bridge is substituted or unsubstituted; Q is a hydrocarbyl radical having from 1 to20 carbon atoms or a halogen, and M is a group IVb transition metal or Vanadium.

Each indenyl compound may be substituted in the same way or differently from one another at one or more positions in the cyclopentadienyl ring, the cyclohexenyl ring and the bridge.

Each substituent may be independently chosen from those of formula $XR_v$ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both indenyls are hydrogenated indenyls. More preferably, they are unsubstituted.

R" is preferably a C1-C4 alkylene radical (as used herein to describe a difunctional radical, also called alkylidene), most preferably an ethylene bridge (as used herein to describe a difunctional radical, also called ethylidene), which is substituted or unsubstituted.

The metal M is preferably zirconium, hafnium, or titanium, most preferably zirconium.

Each Q is the same or different and may be a hydrocarbyl or hydrocarboxy radical having 1 to 20 carbon

atoms or a halogen. Suitable hydrocarbyls include aryl, alkyl,alkenyl,alkylaryl or arylalkyl. Each Q is preferably halogen.

Among the preferred metallocenes used in the present invention, one can quote bis tetrahydro-indenyl compounds and bis indenyl compounds as disclosed for example in WO 96/35729. The most preferred metallocene catalyst is ethylene bis (4,5,6,7-tetrahydro-1-indenyl) zirconium dichloride.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

The addition on the support, of an agent that reacts with the support and has an ionising action, creates an active site.

Preferably, alumoxane is used to ionise the catalyst during the polymerization procedure, and any alumoxane known in the art is suitable.

The preferred alumoxanes comprise oligomeric linear and/or cyclic alkyl alumoxanes represented by the formula :

(IV) 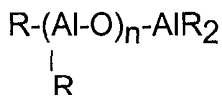

for oligomeric, linear alumoxanes
and

(V) 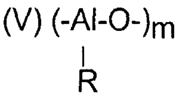

for oligomeric, cyclic alumoxanes,
wherein n is 1-40, preferably 10-20, m is 3-40, preferably 3-20 and R is a $C_1$-$C_8$ alkyl group and preferably methyl. Methylalumoxane is preferably used.

One or more aluminiumalkyl(s) can be used as cocatalyst in the reactor. The aluminiumalkyl is represented by the formula $AlR_X$ wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

Further, the catalyst may be prepolymerised prior to introducing it in the reaction zone and/or prior to the stabilization of the reaction conditions in the reactor.

The polymerisation of the metallocene-produced high density polyethylene can be carried out in gas, solution or slurry phase. Slurry polymerisation is preferably used to prepare the high density polyethylene. The polymerisation temperature ranges from 20 to 125 °C, preferably from 60 to 95 °C and the pressure ranges from 0.1 to 5.6 Mpa, preferably from 2 to 4 Mpa, for a time ranging from 10 minutes to 4 hours, preferably from 1 and 2.5 hours.

A continuous single loop reactor is preferably used for conducting the polymerisation under quasi steady state conditions.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer which can be used include 1-olefins, typically C3 to C20 olefins among which propylene, butene, hexene, octene, 4-methyl-pentene are preferred, the most preferred being hexene.

Any injection machine known in the art may be used in the present invention, such as for example the ENGEL 125T. All mould types may be used.

The articles produced according to the present invention are characterised by a very low shrinkage and warpage.

The polyethylene structure is mainly influenced by the catalytic system used for polymerisation and said structure is responsible for the properties of the final articles. It has been observed that a di(n-butyl-cyclopentadienyl) zirconium dichloride catalyst produces a linear polyethylene resin with a narrow molecular weight distribution of about 2.5, that a Ziegler-Natta catalyst produces a linear polyethylene resin with a broader molecular weight distribution of the order of 5 and that a tetrahydro-indenyl catalyst produces a polyethylene with a large amount of long chain branches and a narrow molecular weight distribution of the order of 2.8.

The molecular weight distribution (MWD) is completely defined by the polydispersity index D that is the ratio Mw/Mn of the weight average molecular weight (Mw) to the number average molecular weight (Mn).

The Dow Rheological Index (DRI) gives a measure of the amount of long chain branches. The lower the DRI value, the lower the amount of long chain branches. In the present invention, the DRI is determined by fitting the Rheological Dynamic Analysis (RDA) curve of the HDPE by the Cross rheological model described here-below.

The dynamic rheology is measured using the method of the RDA. It is a measure of the resistance to flow of material placed between two parallel plates rotating with respect to each other with an oscillatory motion. The apparatus comprises a motor that transmits a sinusoidal deformation to the sample. The sample then transmits the resulting constraint, said resulting constraint being also sinusoidal. The material to be studied can be a solid attached between two anchoring points or it can be melted between the two plates. The dynamic rheometer allows the simultaneous measurement of both the elastic modulus and the viscous modulus of the material. Indeed, the resulting sinusoidal constraint is displaced by a phase angle δ with respect to the imposed deformation and it is mathematically possible to decompose the resulting sinusoid into:

- a first sinusoid in phase with the initial deformation that represents the elastic component of the material. Said component conserves energy.
- a second sinusoid displaced by a phase angle of π/2 with respect to the initial deformation that represents the viscous component. Said component dissipates energy into heat.

The initial deformation is represented by the formula

$$\gamma = \gamma_0 \sin(\omega t)$$

wherein ω is the frequency.

The resulting constraint is thus of the form

$$\tau = \tau_0 \sin(\omega t+\delta)$$

The complex modulus is given by the formula

$$G = \tau/\gamma$$

The complex modulus can be decomposed into the elastic modulus G' and the viscous modulus G" defined respectively as

$$G' = G \cos(\delta)$$

and

$$G'' = G \sin(\delta)$$

The complex viscosity is defined as G / ω.

At constant temperature and constant deformation amplitude, G' and G" can be measured for different values of ω. The measurements were carried out under the following operating conditions:

- a constant operating temperature of 190 °C,
- parallel plates separated by 1.5 mm,
- maximum deformation maintained at 10%.

The elastic component G' and the viscous component G" can be graphed as a function of frequency ω. The point of intersection between the elastic and viscous curves, called the cross-over point (COP), is characterised by a frequency $\omega_c$ and a viscosity component $G_c$. The cross-over point is characteristic of each polymer and is a function of the molecular weight and of the molecular distribution.

To characterize the rheological behavior of substantially linear ethylene polymers, S. Lai and G.W. Knight introduced ( ANTEC '93 Proceedings, Insite™ Technology Polyolefins (ITP)-New Rules in the Structure/Rheology Relationship of Ethylene &-Olefin Copolymers, New Orleans, La., May 1993) a new rheological measurement, the Dow Rheology Index (DRI) which expresses a polymer's "normalized relaxation time as the result of long chain branching". S.Lai et al; ( Antec '94, Dow Rheology Index (DRI) for Insite™ Technology Polyolefins (ITP): Unique structure-Processing Relationships, pp. 1814-1815) defined the DRI as the extent to which the rheology of ethylene-octene copolymers known as ITP ( Dow's Insite Technology Polyolefins) incorporating long chain branches into the polymer backbone deviates from the rheology of the conventional linear homogeneous polyolefins that are reported to have no Long Chain Branches (LCB) by the following normalized equation:

$$DRI = (365000\ (t_0/\eta_0)-1)/10$$

wherein $t_0$ is the characteristic relaxation time of the material and $\eta_0$ is the zero shear viscosity of the material. The DRI is calculated by least squares fit of the rheological curve (complex viscosity versus frequency) as described in US-6,114,486 with the following generalized Cross equation, i.e.

$$\eta = \eta_0/(1+(\sigma.t_0)^n)$$

wherein n is the power law index of the material, r) and σ are the measured viscosity and shear rate data respectively. The dynamic rheological analysis was performed at 190°C and the strain amplitude was 10%. Results are reported according to ASTM D 4440. A low value of the Dow rheological index is indicative of low or inexistant Long Chain Branching (LCB). At equivalent molecular weight distribution, the content of LCB increases with increasing DRI. A value of DRI above one indicates a high level of LCB. It is also known that a high level of LCB is associated with a large elastic component as indicated by dynamic rheology.

The present applicant has observed that the high density polyethylene resins polymerized with a tetrahydro-indenyl catalyst system produce injection-moulded articles that have a substantially improved dimensional stability. This remarkable behaviour is associated with the large amount of long chain branches present in the HDPE resins polymerized with the terahydro-indenyl catalyst system.

The injection-moulded articles prepared according to the present invention can be used to prepare articles that require a high dimensional stability such as caps and closures or technical parts.

**List of Figures.**

Figure 1 represents shrinkage in the longitudinal direction (flow shrinkage) expressed in percent (%) as a function of distance from the gate expressed in cm, for a holding pressure of 560 bars, for a multi-gate mould having gate widths respectively of 10 mm (Gate 1) and of 110 mm (Gate 3) and for resins R3, R6 and R9.

Figure 2 represents shrinkage in the longitudinal direction (flow shrinkage) expressed in percent (%) as a function of distance from the gate expressed in cm, for a holding pressure of 320 bars, for a multi-gate mould having gate widths respectively of 10 mm (Gate 1) and of 110 mm (Gate 3) and for'resins R3, R6 and R9.

Figure 3 represents shrinkage in the longitudinal direction (flow shrinkage) expressed in percent (%) as a function of distance from the gate expressed in cm, for holding pressures of respectively 270 and 430 bars, for a long rectangular plate and for resins R3, R6 and R9.

Figure 4 represents shrinkage in the transverse direction (transverse shrinkage) expressed in percent (%) as a function of distance from the gate expressed in cm, for a holding pressure of 560 bars, for a multi-gate mould having gate widths respectively of 10 mm (Gate 1) and of 110 mm (Gate 3) and for resins R3, R6 and R9.

Figure 5 represents shrinkage in the transverse direction (transverse shrinkage) expressed in percent (%) as a function of distance from the gate expressed in cm, for a holding pressure of 320 bars, for a multi-gate mould having gate widths respectively of 10 mm (Gate 1) and of 110 mm (Gate 3) and for resins R3, R6 and R9.

Figure 6 represents shrinkage in the transverse direction (transverse shrinkage) expressed in percent (%) as a function of distance from the gate expressed in cm, for a holding pressure of 270 bars, for a long rectangular plate and for resins R3, R6 and R9.

Figure 7 represents the warpage expressed in mm as a function of holding pressure expressed in bars for

resins R1, R3, R4, R6, R7 and R9.

Figure 8 represents the zero-shear viscosity expressed in Pa.s as a function of molecular weight for resins R3, R6, R9 and for the commercial resins R10, R11 and R12.

## Examples.

Several HDPE resins produced with different catalyst systems have been tested.

Resins R1 to R3 were polymerised with ethylene bis(4,5,6,7-tetrahydro-1-indenyl) zirconium dichloride (THI), according to the present invention.

Resins R4 to R6 are comparative resins prepared with a conventional Ziegler-Natta catalyst (ZN).

Resins R7 to R9 are comparative resins prepared with di(n-butylcyclopentadienyl) zirconium dichloride catalyst (n-butyl).

Resin R10 is a reference commercial HDPE resin sold under the name Rigidex® 6070 by BP.

Resin R11 is a reference commercial HDPE resin sold under the name Lacqtene® 2070ML60 by ATOFINA.

R12 is a reference commercial HDPE resin sold under the name Eltex® 4090 by Solvay.

The properties of these resins are summarised in Table I.

TABLE I

| Material | MI2 (g/10 min) | HLMI (g/10 min) | Mw (g/mol) | DRI @ 190°C | Density (g/cm$^3$) |
|---|---|---|---|---|---|
| R1 | 3.8 | 105.5 | 65221 | 6.77 | 0.9505 |
| R2 | 12 | - | 50130 | 1.93 | 0.9555 |
| R3 | 24.4 | - | 42327 | 0.78 | 0.9557 |
| R4 | 3.5 | 93.4 | 91953 | 0.38 | 0.9539 |
| R5 | 13.9 | - | 52700 | 0.4 | 0.9538 |
| R6 | 21.2 | - | 47042 | 0.38 | 0.9535 |
| R7 | 3.3 | 53.5 | 73975 | 0.03 | 0.9513 |
| R8 | 13 | 213.1 | 50758 | 0.04 | 0.956 |
| R9 | 23.3 | - | 42506 | 0.06 | 0.956 |
| R10 | 7.5 | - | 59785 | 0.27 | 0.96 |
| R11 | 8 | - | 66719 | 0.41 | 0.96 |
| R12 | 10.4 | - | 63878 | 0.54 | 0.951 |
| - means: not available | | | | | |

The injection moulding machine used to prepare the samples was an ENGEL 125T.

Several moulds have been used in order to measure the various properties:

- warpage was measured on discs;
- shrinkage was measured on multi-gate moulds and on long rectangular moulds;
- impact was measured on square plaque moulds.

The moulds' characteristics are as follows.

Disc mould.

This is a single cavity mould having a diameter of 180 mm, a thickness of 3 mm and a centered sprue gate of 8 mm diameter.

Multi-gate mould.

This mould has the dimensions of 115x110x3 mm and has several possible gates:

- a fan gate having a width of 110 mm and a thickness of 1 mm (Gate 3)

- a semi-fan gate having a width of 25 mm and a thickness of 1 mm (Gate 2)
- a semi-fan gate having a width of 8 mm and a thickness of 1 mm (Gate 1)

Long rectangular mould.

- This mould has the dimensions of 250x70x3 mm and a semi-fan gate having a width of 10 mm and a thickness of 1.5 mm.

Square plague mould.

- This mould has the dimensions of 60.95x60.95x2 mm and a fan gate having a width of 60.95 mm and a thickness of 1 mm.

The processing conditions were as follows.
For the long rectangular mould program, for all samples treated (resins R3, R6 and R9), the melt temperature was of 200 °C, the mould temperature was of 40 °C, the injection speed was of 30 mm/s, the holding pressure was of 430 bars (HP) or of 270 bars (LP), the holding time was of 15 seconds and the cooling time was of 30 seconds.
For the multi-gate mould program, for all samples treated (resins R3, R6 and R9) and for all the gates selected (Gate 1 and Gate 3), the melt temperature was of 200 °C, the mould temperature was of 40 °C, the injection speed was of 25 mm/s, the holding pressure was of 560 bars (HP) or of 320 bars (LP), the holding time was of 25 seconds and the cooling time was of 25 seconds.
For the disc mould program, for all samples treated (resins R3, R6 and R9,) the melt temperature was of 200 °C, the mould temperature was of 40 °C, the injection speed was of 30 mm/s, the holding pressure was varied from 160 bars to 800 bars, the holding time was of 30 seconds and the cooling time was of 20 seconds.
The impact resistance and the dimensional stability, that was defined in terms of shrinkage and warpage, were measured.
The impact resistance was measured following the method of standard test ISO 6603-02, at temperatures of -20 °C and 23 °C (room temperature). The ductility or brittleness is described in terms of the ductility index (DI) that is defined as

$$DI = ( E_{total} - E_{peak}) / E_{total}$$

wherein $E_{total}$ represents the total area under the falling weight curve representing the total displacement as a function of impact force and $E_{peak}$ represents the area under the falling weight curve representing the displacement as a function of impact force up to maximum force. A small value of DI is associated with a brittle behaviour whereas a large value of DI is representative of a ductile behaviour. From the global Pareto diagram, derived from a statistical analysis of a design of experiment for an injection program, it was concluded that the ductility index is governed by the density of the resin.
All the polyethylene resins tested had a value of the ductility index in the range of 34 to 46 % whereas polypropylene resins typically exhibit a ductility index in the range of 2 to 11 %. Among the polyethylene resins, the ductility index depends upon the catalyst system used for polymerization as follows:

$$DI \text{ (n-butyl)} \leq DI \text{ ( THI)} = DI \text{ (ZN)}$$

Mould shrinkage factor is measured by recording how much a moulded article dimension reduces after the moulding has cooled. The reduced dimension is compared to the reference dimension taken from the actual mould and the percentage of shrinkage is then determined. Shrinkage is measured both in the longitudinal and transverse directions as a function of distance from the gate.
The measurements were carried out on articles prepared from different moulds:

- a multi-gate mould of 115x110x3 mm respectively with a 10 mm-width gate, Gate 1, and with a 110 mm-width gate, Gate 3;

- a lond rectangular mould of 250x70x3 mm.

The measurements were performed in longitudinal and transverse directions for holding pressures of 560 and 320 bars respectively in the case of multi-gate moulds and for holding pressures of 430 and 270 bars respectively in the case of long rectangular moulds.

The shrinkage measurements were carried out on square plaques, one week after injection. The square plates themselves were sub-divided into a square grid. Dimensional measurements between the grid elements were performed in length, width and thickness, at various distances from the origin defined as the center of the injection gate. The longitudinal and transverse distances were measured with a caliper having a 20-micron accuracy.

The flow shrinkage results expressed in % are displayed in Table II and in Figures 1 to 6.

TABLE II

| Mould | Pressure | THI resin | ZN resin | n-butyl resin |
|---|---|---|---|---|
| Multi-gate | 560 bars | 0.85 % | 1.05 % | 1.15 % |
| | 320 bars | 1.25 % | 1.4 % | 1.5 % |
| Long rectangular | 430 bars | 1.3 % | 1.65 % | 1.75 % |
| | 270 bars | 1.6 % | 1.9 % | 1.95 % |

It can be concluded from these results that the resins according to the present invention, prepared with a tetrahydro-indenyl catalyst system present a significantly improved level of shrinkage in the longitudinal direction and may compete with polypropylene resins. In the transverse direction, the level of shrinkage of the resins according to the present invention is in line with that of resins prepared with a Ziegler-Natta catalyst generally used in the field and it is much better than that of resins prepared with a n-butyl catalyst system.

The amount of warpage on articles produced by injection moulding is obtained as follows. The articles under test are injection moulded discs with a central gate. The pressure is high near the central gate and drops off as a function of distance from the centre of the disc. As a consequence, more polymer material is packed near the centre of the disc resulting in less shrinkage at the centre of the disc than at the edge. The non-uniform shrinkage is responsible for warpage.

Three main type of buckling deformations have been described in literature:

- saddle-like warpage;
- bowl-like warpage
- waving at circumference with three cycles.

Saddle-like warpage is observed in the present test. The measurements were carried out on all the injection-moulded samples as follows:

- after one week;
- after six months; and
- after six months and heat re-treatment for one night in an oven at 80 °C.

It was observed that the deformation was a quasi-symmetric double waving at the circumference. It was also observed that increasing the holding pressure decreased warpage. The maximum buckling amplitude as a function of holding pressure can be fitted by an exponential curve of the general formula:

$$\text{Warpage} = A \,.\, \exp(-\,\alpha \,.\, HP)$$

wherein HP is the holding pressure and A and $\alpha$ are constants that depend upon the resin's structural characteristics.

It was further observed that the level of buckling decreased as a function of time after injection moulding as time allows reducing residual stresses responsible for warpage. This improvement in warpage was however very slow. Heat re-treatment allows further reduction of the internal stresses and therefore further reduction in warpage.

The warpage results expressed in mm are summarised in Figure 7 and in Table III.

TABLE III

| Material | 1 week after injection | 6 months after injection | 6 month after injection + 1 night at 80 °C |
|---|---|---|---|
| R1 | 2.2mm | 1.3mm | 1.2mm |
| R3 | 2.8mm | 1.8mm | 2.4mm |
| R4 | 6.9 mm | 4.9 mm | 4.4 mm |
| R6 | 3.0 mm | 4.4 mm | 2.7 mm |
| R7 | 7.7 mm | 7.2 mm | 5.2 mm |
| R9 | 4.4 mm | 4.5 mm | 4.0 mm |

The zero-shear viscosity was determined from RDA curve fitting using the Cross rheological model. A log/log plot of the zero-shear viscosity expressed in Pa.s as a function of molecular weight for various resins ( Figure 8) shows that the THI-based resins have a molecular structure that is different from that of other resins generally used in the field of injection moulding. The zero-shear viscosity can be expressed as

$$\eta_0 \propto Mw^{\beta}$$

wherein Mw is the weight average molecular weight and β is a factor that is characteristic of the molecular structure of the resin. Resins having a linear structure have a β factor of about 3.5, whereas THI is characterised by a β factor of about 8 indicative of long chain branching. Long chain branching is responsible for the exceptional dimensional stability of the injected articles according to the present invention.

## Claims

1. Articles having improved dimensional stability produced by injection moulding and consisting essentially of high density polyethylene (HDPE) resins prepared with a bis-indenyl metallocene catalyst system.

2. The articles according to claim 1 wherein the high density polyethylene resin has a density of from 0.945 to 0.960 g/cm$^3$ and a melt flow index of from 0.5 to 200 g/10 min.

3. The articles according to claim 1 or claim 2 wherein the bis-indenyl metallocene catalyst is a bis(tetrahydro-indenyl) catalyst.

4. The articles according to claim 3 wherein the bis(tetrahydro-indenyl) catalyst is ethylene bis(4,5,6,7-tetrahydro-1-indenyl) zirconium dichloride.

5. The articles according to claim 1 or claim 2 wherein the high density polyethylene resin has a high level of long chain branching **characterised by** a Dow rheological index (DRI) larger than 0.75.

6. The articles according to any one of the preceding claims wherein the shrinkage is less than 1.5 %.

7. Use of a high density polyethylene prepared with a bis-indenyl metallocene catalyst to prepare articles having reduced shrinkage.

8. Use of a high density polyethylene prepared with a bis-indenyl metallocene catalyst to prepare articles having reduced warpage.

FIGURE 1

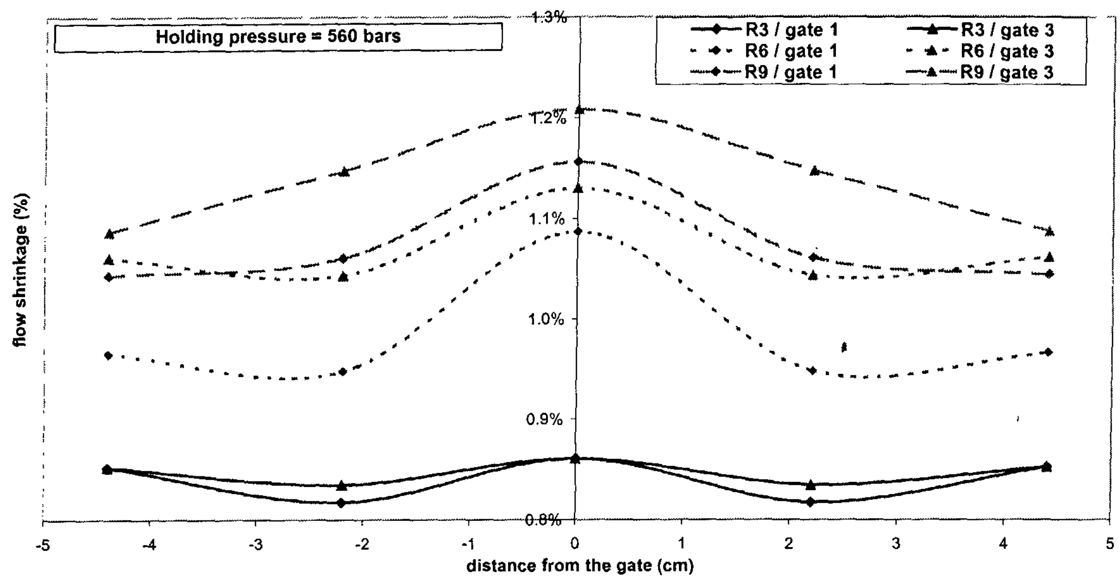


FIGURE 2

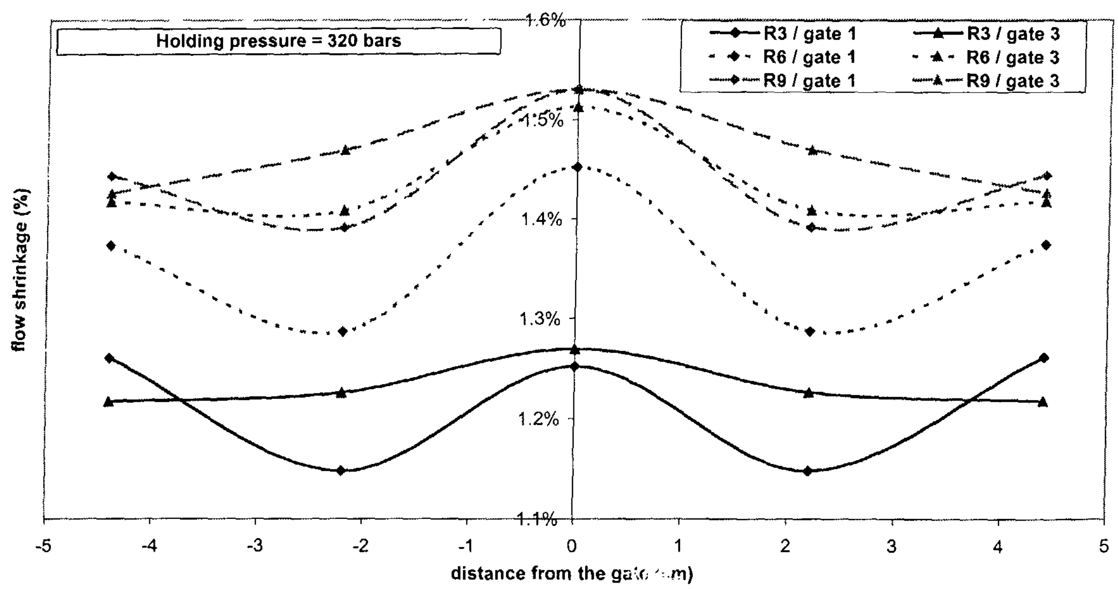

FIGURE 3

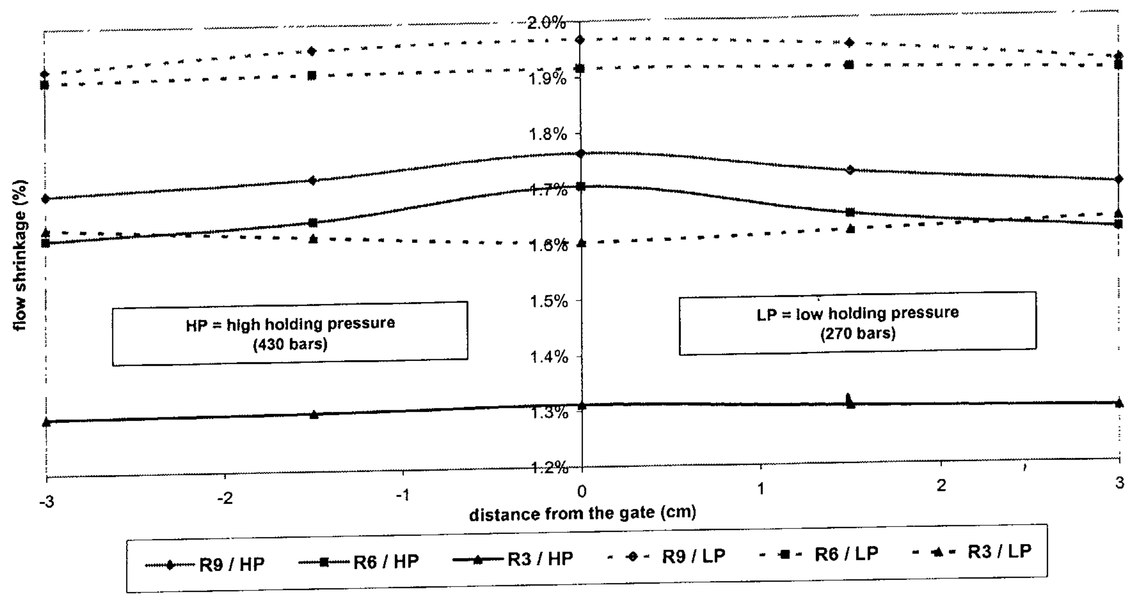


FIGURE 4

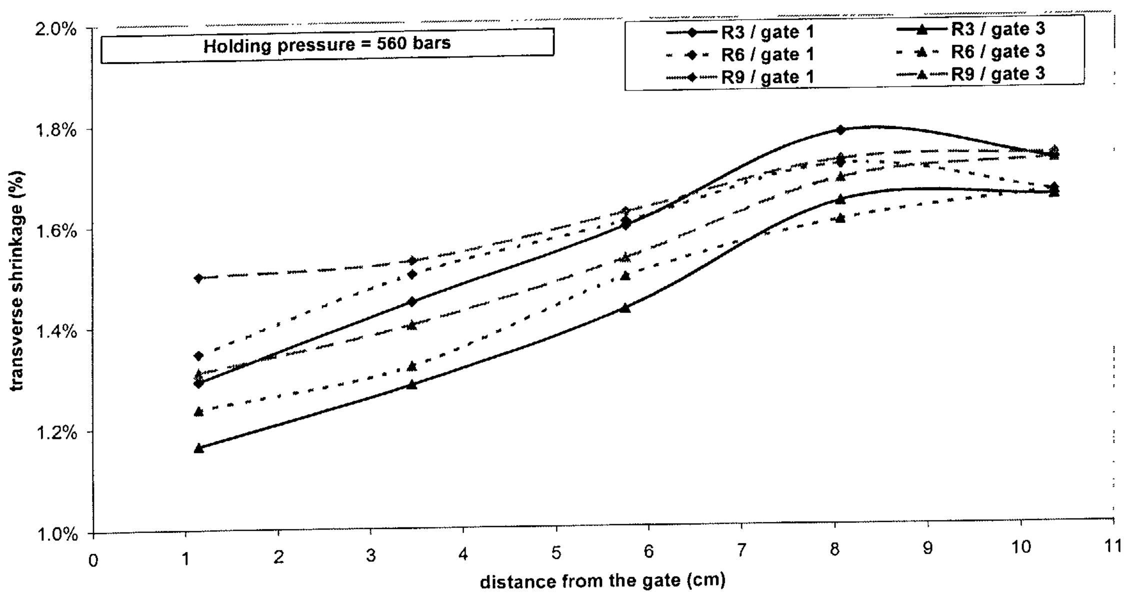

FIGURE 5

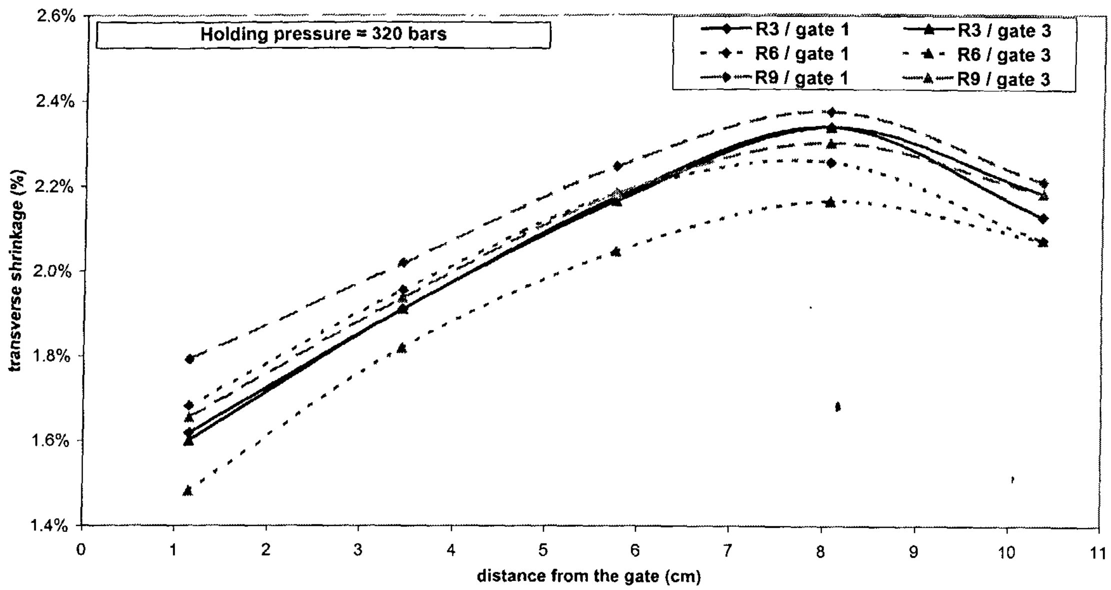


FIGURE 6

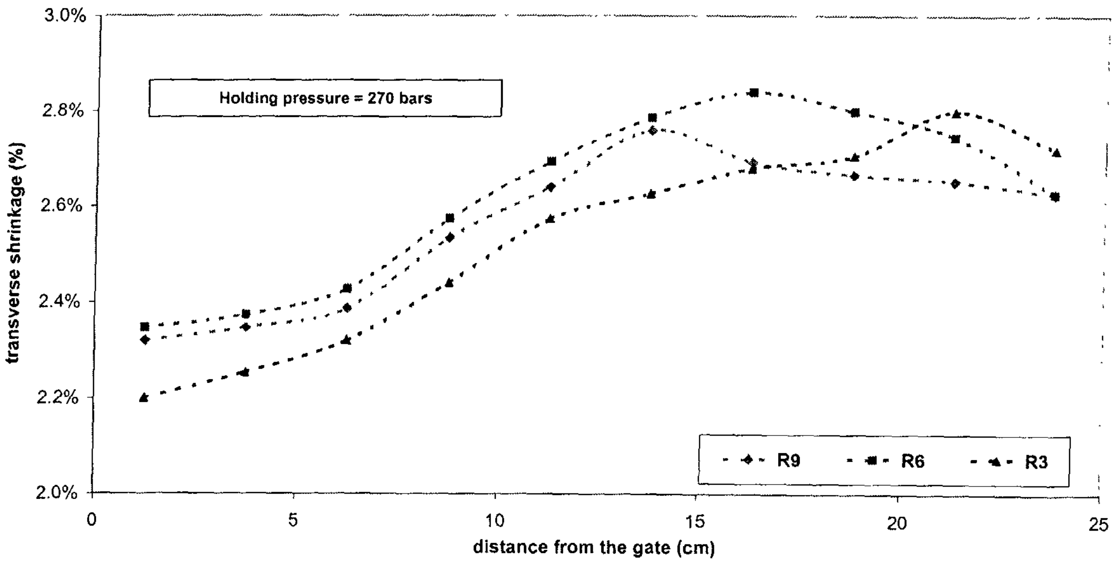

FIGURE 7

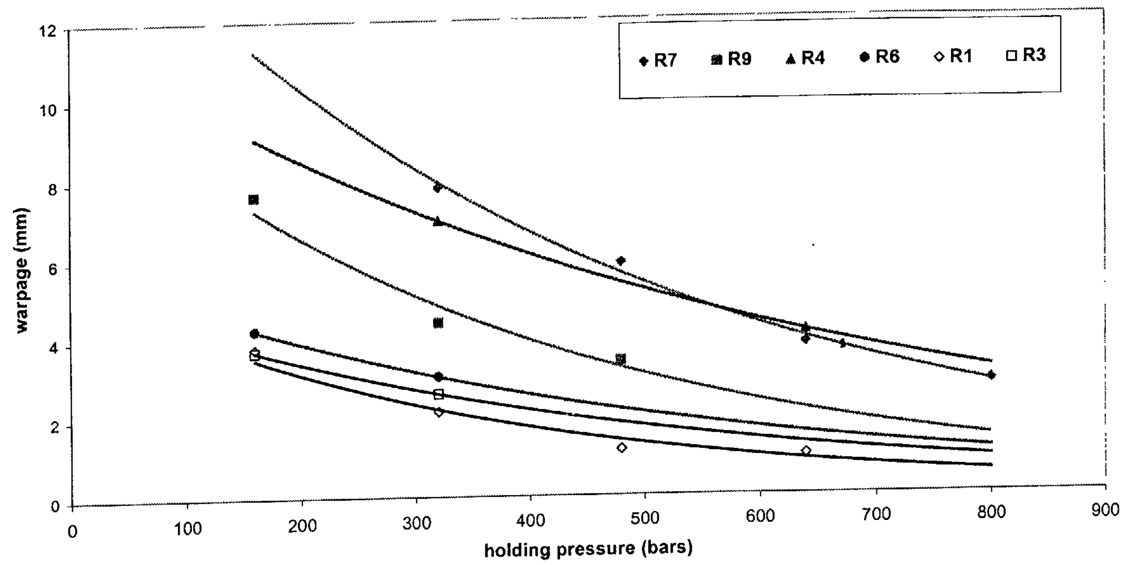


FIGURE 8

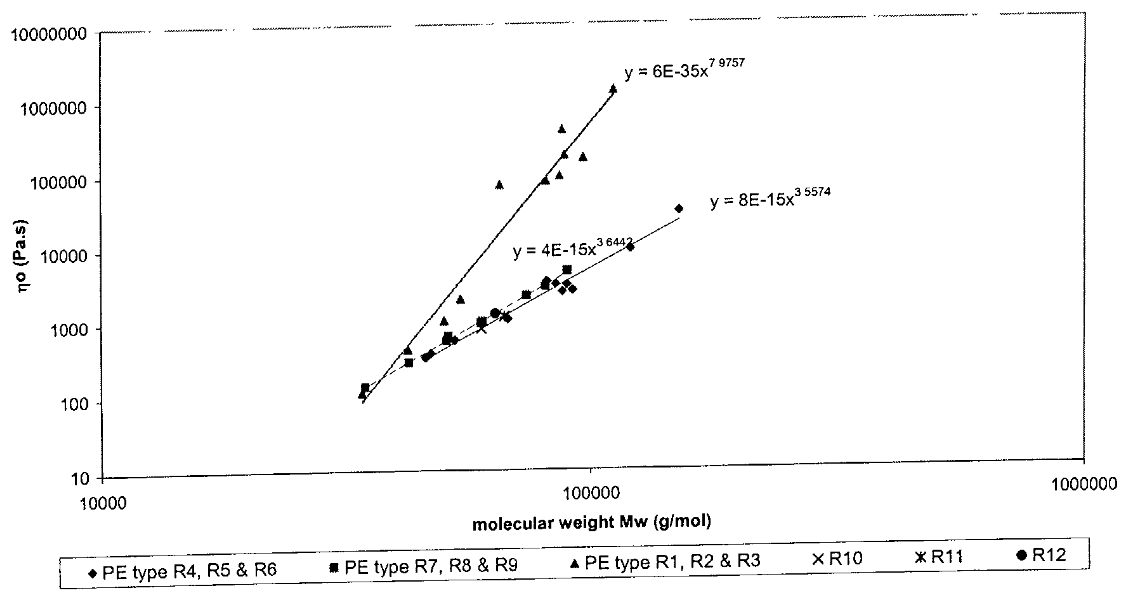

European Patent Office

# EUROPEAN SEARCH REPORT

Application Number
EP 02 07 6664

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 783 022 A (MITSUI PETROCHEMICAL IND) 9 July 1997 (1997-07-09) * the whole document * --- | 1,2 | C08F10/02 |
| P,X | WO 02 34829 A (BETTONVILLE SERGE ;ATOFINA RES (BE); DUPIRE MARC (BE); MICHEL JACQ) 2 May 2002 (2002-05-02) * the whole document * --- | 1-4 | |
| A | EP 0 881 237 A (FINA RESEARCH) 2 December 1998 (1998-12-02) * the whole document * --- | 1-8 | |
| A | AU 21280 99 A (J R COURTENAY NZ LIMITED) 30 September 1999 (1999-09-30) * the whole document * --- | 1-8 | |
| A | EP 1 138 702 A (FINA RESEARCH) 4 October 2001 (2001-10-04) * the whole document * ----- | 1-8 | |
| | | | TECHNICAL FIELDS SEARCHED (Int.Cl.7) |
| | | | C08F |

The present search report has been drawn up for all claims

| Place of search | Date of completion of the search | Examiner |
|---|---|---|
| MUNICH | 2 October 2002 | Balmer, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 07 6664

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2002

| Patent document cited in search report | | Publication date | Patent family member(s) | | | Publication date |
|---|---|---|---|---|---|---|
| EP 0783022 | A | 09-07-1997 | EP | 0783022 | A1 | 09-07-1997 |
| | | | KR | 199433 | B1 | 15-06-1999 |
| | | | US | 6063871 | A | 16-05-2000 |
| | | | CA | 2200741 | A1 | 06-02-1997 |
| | | | CN | 1159202 | A | 10-09-1997 |
| | | | WO | 9704026 | A1 | 06-02-1997 |
| | | | JP | 9095571 | A | 08-04-1997 |
| | | | JP | 9095572 | A | 08-04-1997 |
| WO 0234829 | A | 02-05-2002 | EP | 1201713 | A1 | 02-05-2002 |
| | | | AU | 2066402 | A | 06-05-2002 |
| | | | WO | 0234829 | A1 | 02-05-2002 |
| EP 0881237 | A | 02-12-1998 | EP | 0881237 | A1 | 02-12-1998 |
| | | | WO | 9854232 | A1 | 03-12-1998 |
| | | | EP | 0986588 | A1 | 22-03-2000 |
| | | | JP | 2001526731 | T | 18-12-2001 |
| | | | US | 6380311 | B1 | 30-04-2002 |
| AU 2128099 | A | 30-09-1999 | NONE | | | |
| EP 1138702 | A | 04-10-2001 | EP | 1138702 | A1 | 04-10-2001 |
| | | | AU | 5474901 | A | 08-10-2001 |
| | | | WO | 0172856 | A1 | 04-10-2001 |

EPO FORM P0459

For more details about this annex : see Official Journal of the European Patent Office, No. 12/82